**Europäisches Patentamt**

**European Patent Office**

**Office européen des brevets**

(19)

(11) Veröffentlichungsnummer: **0 257 569**
B1

(12) EUROPÄISCHE PATENTSCHRIFT

(45) Veröffentlichungstag der Patentschrift:
10.01.90

(51) Int. Cl.⁴: **B60H 1/00**

(21) Anmeldenummer: **87112113.3**

(22) Anmeldetag: **20.08.87**

(54) **Fahrzeug, insbesondere Omnibus, mit einem für eine Klimaanlage vorgesehenen Dachaufbau.**

(30) Priorität: **21.08.86 DE 8622360 U**

(43) Veröffentlichungstag der Anmeldung:
**02.03.88 Patentblatt 88/9**

(45) Bekanntmachung des Hinweises auf die Patenterteilung:
**10.01.90 Patentblatt 90/2**

(84) Benannte Vertragsstaaten:
**DE ES FR GB IT NL**

(56) Entgegenhaltungen:
**DE-A- 2 952 371**
**FR-A- 1 165 665**
**US-A- 4 134 275**

(73) Patentinhaber: **Karl Kässbohrer Fahrzeugwerke GmbH, Kässbohrerstrasse 13 Postfach 2660, D-7900 Ulm (Donau)(DE)**

(72) Erfinder: **Sonderholzer, Alfons, Martinus Weg 24, D-7900 Ulm 13(DE)**

(74) Vertreter: **Patentanwälte Grünecker, Kinkeldey, Stockmair & Partner, Maximilianstrasse 58, D-8000 München 22(DE)**

## Beschreibung

Die Erfindung bezieht sich auf ein Fahrzeug, insbesondere Omnibaus, mit einem für eine Klimaanlage vorgesehenen Dachaufbau nach dem Oberbegriff des Patentanspruchs 1.

Aus der DE-A 2 952 371 ist ein solches Fahrzeug in Form eines Eisenbahnwagens bekannt, dessen Dachaufbau entlang beider Seitenwände mit Kondensatoren versehen ist. Die Kondensatoren verlaufen schräg nach innen und oben in Richtung zur Oberseite, wobei sie mit letzterer einen stumpfen Winkel einschließend, steil angeordnet sind. Zwischen den Kondensatoren befinden sich die Luftaustrittsöffnung und das derselben zugeordnete Gebläse. Der Dachaufbau ist direkt auf dem Dach des Eisenbahnwagens befestigt. Nachteilig bei diesem bekannten Dachaufbau ist die relativ geringe Fläche und damit Kühlleistung der Kondensatoren aufgrund ihrer vergeichsweise steilen Anordnung und dementsprechend geringen Breiten. Einer Verlängerung des Dachaufbaus und damit der Kondensatoren in Längsrichtung des Fahrzeugs zur Vergrößerung der Kondensatorfläche sind bauliche Grenzen gesetzt. Eine Vergrößerung der Kondensatorfläche durch größere Breitenabmessungen der Kondensatoren erfordert bei gleicher Schrägstellung derselben eine größere Höhe des Dachaufbaus, der dann einen größeren Luftwiderstand bietet. Eine Vergrößerung der Kondensatorfläche durch größere Schrägstellung der Kondensatoren setzt eine Verringerung der Größe der Luftaustrittsöffnung und des Gebläses voraus. Dadurch werden der Luftaustausch und folglich die Kühlleistung erheblich beeinträchtigt. Es zeigt sich, daß bei dem bekannten Dachaufbau unabhängig von der Schrägstellung der Kondensatoren ein leistungsstarkes Gebläse mit im wesentlichen kontinuierlichem Betrieb erforderlich ist.

Der Erfindung liegt die Aufgabe zugrunde, ein Fahrzeug der eingangs erläuterten Gattung zu schaffen, das eine Anpassung an den Leistungsbedarf des Kondensators bei gleichzeitig erhöhter Kühlerleistung desselben ermöglicht.

Diese Aufgabe wird erfindungsgemäß bei einem gattungsgemäßen Fahrzeug durch die kennzeichnenden Merkmale des Patentanspruchs 1 gelöst.

Dadurch, daß die Oberseite des Dachaufbaus entsprechend der Oberseite eines Tragflügelflächenprofils ausgebildet ist, wird mit der entlang der Oberseite des Dachaufbaus strömenden Fahrtluft ein nach oben gerichteter Sog erzielt, der einen stetigen Luftstrom aus dem die Kondensatoren umgebenden Raum in die Atmosphäre abzieht. Dies bedeutet eine hohe Luftaustauschleitung und entsprechend hohe Kühlleistung der Kondensatoren, so daß die Gebläse unproblematisch in mehreren Stufen geschaltet werden können, beispielsweise derart, daß sie lediglich im Stillstand und bei niedrigen Fahrzeuggeschwindigkeiten in Betrieb genommen werden. Dies führt zu einer Erhöhung der Lebensdauer der Gebläse, zu einer Reduzierung der Lärmbelästigung und zu einer Energieeinsparung. Vorteilhaft ist dabei, daß ein solcher Luftabzug ohne weitere Vorrichtungen und/oder Installationen, ohne einen zusätzlichen Energieverbrauch und daher besonders wirtschaftlich durchführbar ist.

Die Anordnung der Kondensatoren im Mittenbereich des Dachaufbaus und ihre zur Mitte hin V-förmig geneigte Anordnung erlaubt es, dieselben im Vergleich zum Stand der Technik mit erheblich größerer Schrägstellung – unter Einschluß eines spitzen Winkels mit der Oberseite des Dachaufbaus – anzuordnen und damit erheblich größere Kondensatorflächen zu erzielen. Gleichzeitig wird der für die Luftaustrittsöffnung zur Verfügung stehende Bereich zwischen den Kondensatoren vergrößert. Dies führt nicht nur zu einer höheren Kühlleistung der Kondensatoren, sondern läßt auch die Verwendung von Gebläsen geringerer Leistung zu. Infolge der größeren Schrägstellung der Kondensatoren kann trotz vergrößerter Fläche derselben der Dachaufbau im Vergleich zum Stand der Technik beträchtlich niedriger gebaut und ein entsprechend geringerer Luftwiderstand erzielt werden. Durch die erfindungsgemäße Anordnung der Kondensatoren ist es weiterhin möglich, dieselben mit unterschiedlichen Schrägstellungen anzuordnen und auf diese Weise unter Verwendung des stets gleichen Dachaufbaus die maximale Kühlleistung der Kondensatoren den verschiedensten Fahrzeuggrößen anzupassen. Ein weiterer Vorteil der Anordnung der Gebläse im Seitenwandbereich des Dachaufbaus besteht darin, daß notwendige Wartungs- und Reparaturarbeiten nicht auf dem Dach und ohne Abnehmen der Dachhaube durchgeführt werden können.

Ein Ausführungsbeispiel des Erfindungsgegenstandes wird nachstehend anhand der Zeichnung näher erläutert. Es zeigen

Fig. 1 eine Seitenansicht eines Omnibusses mit dem am Heck angeordneten Dachaufbau,

Fig. 2 eine Frontansicht eines Omnibusses nach Fig. 1 teilweise im Schnitt, und

Fig. 3 einen Querschnitt durch den Dachaufbau nach Fig. 2 in vergrößertem Maßstab.

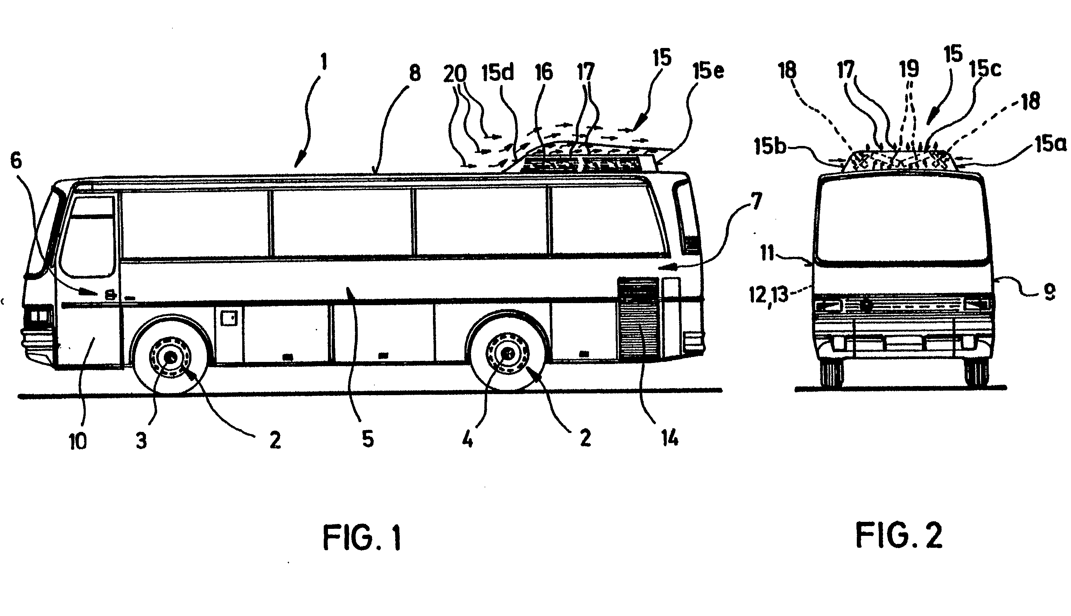

In Fig. 1 ist schematisch ein Omnibus 1 dargestellt, der im wesentlichen ein Fahrgestell 2 mit einer Vorder- und Hinterachse 3, 4 und einen Fahrzeugaufbau 5 mit einem Front-, Heckbereich 6, 7 und einem Dach 8 aufweist. Im Frontbereich 6 sind in Fahrtrichtung auf der linken Seite 9 eine Fahrertür 10 und etwa gegenüberliegend auf der rechten Seite 11 eine erste Tür 12 (nicht näher gezeigt) für Passagiere vorgesehen. Im Heckbereich 7 sind auf der rechten Seite 11 eine zweite Tür 13 (nicht näher gezeigt) für die Passagiere, etwa gegenüberliegend eine Zugangsöffnung 14 zum Motorraum (nicht gezeigt) und auf dem Dach 8 ein Dachaufbau 15 angeordnet, der sich in Längsrichtung im wesentlichen von der Hinterachse 4 bis in Höhe des äußeren Endes der Zugangsöffnung 14 erstreckt.

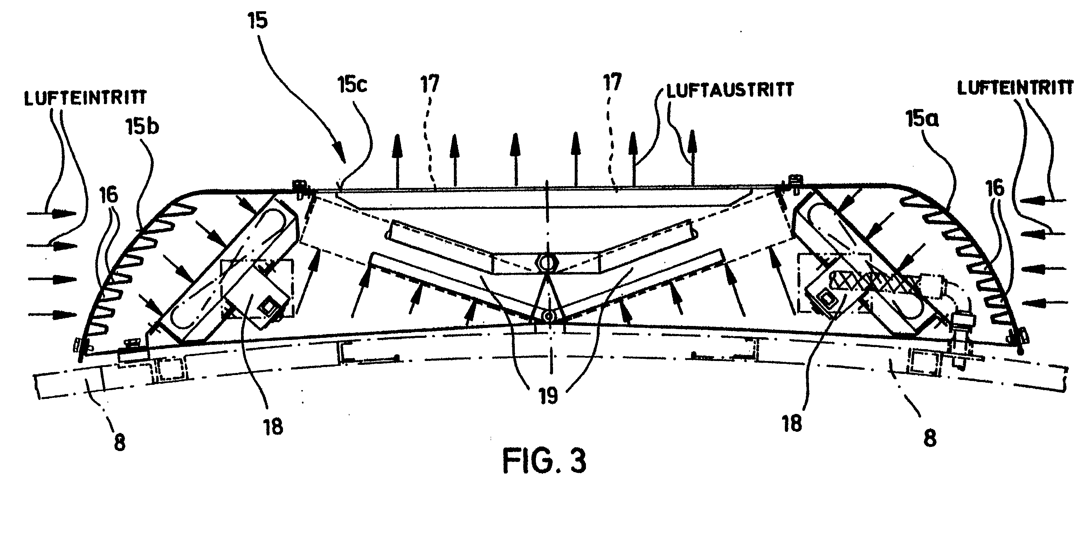

Der Dachaufbau 15 weist parallel zur Fahrzeuglängsachse sich erstreckende Seitenwände 15a, b, eine Oberseite 15c sowie eine zum Frontbereich 6 weisende Stirnwand 15d und eine zum Heckbereich 7 des Omnibusses 1 weisende Hinterwand 15e auf. In den Seitenwänden 15a, b sind gemäß Fig. 2, 3 jeweils Lufteintrittsöffnungen 16 und in der Oberseite 15c Luftaustrittsöffnungen 17 angeordnet. Die Oberseite des Dachaufbaus 15 ist entsprechend der Oberseite eines Tragflügelflächenprofils ausgebildet, wobei die Stirn- und Hinterwand 15d, e jeweils geschlossen ist und erstere in Richtung zur Hinterwand vom Dach 8 schräg zur Oberseite 15c ansteigt und letztere von der Oberseite steil zum Dach 8 abfällt.

Im Inneren des Dachaufbaus 15 sind seitlich in der Nähe der Lufteintriffsöffnungen 16 jeweils Gebläse 18 angebracht, die als Axialgebläse ausgebildet sind (Fig. 3). Im Mittenbereich des Dachaufbaus 15, schräg zur Mitte und in etwa V-förmig unter den Luftaustrittsöffnungen 17, ist der Kondensator 19 angeordnet, an welchen sich seitlich jeweils die Gebläse 18 anschließen.

Durch die Ausbildung der Oberseite des Dachaufbaus entsprechend der Oberseite eines Tragflügelflächenprofils ergibt sich eine strömungstechnisch günstige Umströmung des Dachaufbaus 15, so daß die horizontale Luftströmung 20 über dem Dach 8 während der Fahrt parallel zur Stirnwand 15d abgelenkt wird und sich an der Oberseite 15c des Dachaufbaus ein Unterdruckbereich aufbauen kann. Mit der Geschwindigkeit des Fahrzeugs steigt die Strömungsgeschwindigkeit der Luftströmung 20 und damit die Höhe des Unterdruckes im Bereich der Oberseite an. Die dadurch entstehende Saugwirkung bewirkt auf einfache, effektive Weise ein Durchströmen des Dachaufbaus 15 und ein Umströmen des Kondensators 19 mit Luft, indem diese, gegebenenfalls unterstützt durch die Gebläse 18, über die seitlichen Lufteintrittsöffnungen 16 horizontal in den Dachaufbau eintritt, in dessen mittlerem Bereich den Kondensator umströmt, abkühlt und den Dachaufbau schließlich in nahezu vertikaler Richtung durch die Luftaustrittsöffnungen 17 in der Oberseite 15c verläßt.

Es ist klar, daß die Klimaanlage weitere Bestandteile, wie z.B. einen Kompressor, Verdampfer, Kühlleitungen etc., aufweist, die in dem Fahrzeug untergebracht werden müssen, deren Anordnung und Ausbildung bereits bekannt und für die hier vorliegende Erfindung nur von untergeordneter Bedeutung ist.

Die Ausbildung der Lufteintritts- und -austrittsöffnungen kann auf vielfältige Weise variiert werden. So können z.B. runde, ovale, eckige, geschlitzte, konisch zulaufende Öffnungen auch mit an den jeweiligen Druckverlust angepaßten Querschnitten eingebaut werden. Ferner können Radialgebläse unterschiedlicher Anordnung vorgesehen sein. Als Kondensatoren können die unterschiedlichsten Apparate zur Wärmeübertragung mit den verschiedenartigsten Strömungsführungen verwendet werden, so z.B. Rohrbündel mit rechteckiger, quadratischer, dreiecks- oder wabenförmiger Anordnung, Schikanen zur besseren Umströmung der Rohrbündel, mehrgängige Ausführungen, Spiral- und Plattenwärmeübertrager, außenverrippte Rohre, Strömungsführungen im Gegen-, Parallel- und Gleichstrom etc. Auch kann die Form des Dachaufbaus weiter optimiert werden, indem dieser so ausgebildet ist, daß ein wirksamer Unterdruck bei einem Minimum an Luftwiderstand realisiert wird. Es ist auch möglich, in der Stirn- und/oder Hinterwand Luftschlitze vorzusehen, solange dadurch die Größe des an der Oberseite entstehenden Unterdruckes nur geringfügig beeinflußt wird. Bei besonders druckverlustarmer Durchströmung des Dachaufbaus wäre unter Umständen auch der Einsatz von nur einem Gebläse, gegebenenfalls unter Kopplung mit dem Motorgebläse, möglich. Außerdem kann der Dachaufbau auch bei Fahrzeugen der folgenden Art eingesetzt werden, so z.B. bei Lastkraftwagen, Personenkraftwagen wie Wohn-, Campmobilen oder bei Fahrzeugen im Schienenverkehr.

## Patentansprüche

Fahrzeug, insbesondere Omnibus, mit einem für eine Klimaanlage vorgesehenen Dachaufbau, welcher im wesentlichen eine quer zur Fahrtrichtung sich erstreckende, im wesentlichen geschlossene Stirnwand, parallel zur Fahrtrichtung sich erstreckende Seitenwände mit Lufteintrittsöffnungen und eine Oberseite mit wenigstens einer Luftaustrittsöffnung aufweist und mit wenigstens einem in Durchströmungsrichtung des Dachaufbaus hinter den Lufteintrittsöffnungen angeordneten Kondensator sowie einem Gebläse zum Kühlen des Kondensators mit Luft ausgestattet ist, dadurch gekennzeichnet, daß die Oberseite des Dachaufbaus (15) entsprechend der Oberseite eines Tragflügelflächenprofils zum Erzeugen eines Unterdrucks an der Oberseite (15c) ausgebildet ist, wobei die Gebläse (18) in den Seitenwänden (15a, b) angeordnet und der Kondensator (19) im wesentlichen im Mittenbereich des Dachaufbaus (15), zur Mitte V-förmig geneigt, eingebaut ist.

## Claims

Vehicle, in particular a bus, including a roof structure provided for an air-conditioning device, which roof structure basically comprises an initially closed face panel extending across the direction of travel, side panels extending parallel to the direction of travel with air-inlet openings, and a top panel with at least one air-outlet opening, and with at least one condenser disposed in the through-flow direction of the roof structure behind the air-inlet opening, as well as a blower for cooling the condenser by air, characterised in that the top side of the roof structure (15) is formed like the top side of an airfoil-surface profile to create sub-pressure at the top side (15c) whereby the blowers (18) are disposed in the side panels (15a, b), and the condenser (19) is initially built into the central region of the roof structure (15), tilted V-shaped toward the centre.

## Revendications

Véhicule, en particulier autobus, avec une superstructure de toit qui, prévue pour une installation de climatisation, comporte essentiellement une paroi frontale sensiblement fermée et s'étendant transversalement à la direction de marche, des parois latérales s'étendant parallèlement à la direction de marche et présentant des ouvertures d'entrée d'air, et un dessus avec au moins une ouverture de sortie d'air, et est équipée d'au moins un condenseur monté, dans le sens d'écoulement à travers la superstructure de toit, derrière les ouvertures d'entrée d'air ainsi que d'au moins un ventilateur pour refroidir le condenseur avec de l'air, caractérisé en ce que le dessus de la superstructure de toit (15) est réalisé à la manière de l'extrados d'un profil plat d'aile portante afin de produire une dépression sur le dessus (15c), les ventilateurs (18) étant montés dans les parois latérales (15a, b) et le condenseur (19) étant monté sensiblement dans la région médiane de la structure de toit (15), en étant incliné vers le milieu en forme de V.

FIG.1

FIG.2

FIG. 3

LUFTEINTRITT

LUFTAUSTRITT

LUFTEINTRITT

15a

15b

15c

15

16

16

17

17

18

18

19

8

8